(19) Europäisches Patentamt
European Patent Office
Office européen des brevets

(11) Veröffentlichungsnummer: **0 184 764 B1**

# (12) EUROPÄISCHE PATENTSCHRIFT

(45) Veröffentlichungstag der Patentschrift: **24.04.91**

(51) Int. Cl.⁵: **C08G 81/02**

(21) Anmeldenummer: **85115367.6**

(22) Anmeldetag: **04.12.85**

Die Akte enthält technische Angaben, die nach dem Eingang der Anmeldung eingereicht wurden und die nicht in dieser Patentschrift enthalten sind.

## (54) Copolymere aus einer Hauptkette und Nebenketten.

(30) Priorität: **08.12.84 DE 3444788**

(43) Veröffentlichungstag der Anmeldung: **18.06.86 Patentblatt 86/25**

(45) Bekanntmachung des Hinweises auf die Patenterteilung: **24.04.91 Patentblatt 91/17**

(84) Benannte Vertragsstaaten: **BE DE FR GB NL**

(56) Entgegenhaltungen:
**EP-A- 0 176 979**
**US-A- 3 627 837**

(73) Patentinhaber: **BASF Aktiengesellschaft**
**Carl-Bosch-Strasse 38**
**W-6700 Ludwigshafen(DE)**

(72) Erfinder: **Mueller, Wolfgang F., Dr.**
**Hahnenweg 20**
**W-6730 Neustadt(DE)**
Erfinder: **Taubitz, Christof, Dr.**
**In der Dreispitz 15**
**W-6706 Wachenheim(DE)**
Erfinder: **Reffert, Rudi Wilhelm**
**Berliner Strasse 18**
**W-6711 Beindersheim(DE)**
Erfinder: **Swoboda, Johann, Dr.**
**Neuwiesenstrasse 28**
**W-6700 Ludwigshafen(DE)**
Erfinder: **Seiler, Erhard, Dr.**
**Erpolzheimer Strasse 1**
**W-6700 Ludwigshafen(DE)**

EP 0 184 764 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Copolymeres (Kammpolymeres) aus einer Hauptkette und Nebenketten, wobei letztere durch anionische Polymerisation erhaltene Polymere darstellen.

Durch anionische Polymerisation erhält man bekanntermaßen statistisch aufgebaute Copolymere oder aber Blockcopolymere. Diese werden als thermoplastische Massen oder als Elastomere eingesetzt.

Die Blockcopolymeren zeichnen sich durch Mikro-Domänenbildung aus, wie dies in A. Noshay, "Block Copolymers", Academic Press, New York, 1977, beschrieben ist. Innerhalb bestimmter Bereiche des Molekulargewichts und bestimmter Verhältnisse in der Zusammensetzung der Blöcke kann man elastomere Massen erhalten, die die Eigenschaft der "Selbstvulkanisation" durch Mikrodomänenbildung haben. Sowohl bei den durch anionische Polymerisation hergestellten Homo-, Co- als auch Block-Copolymerisaten wurde bisher konjugierten Dienen, wie Butadien, Isopren, gegebenenfalls hydriert, und vinylsubstituierten aromatischen Kohlenwasserstoffen wie Styrol, der Vorzug gegeben, da man bei der Verwendung anderer Monomerer offenbar keine Produkte mit anwendungstechnischen Eigenschaften bekommt, die in der Praxis eingesetzt werden können.

Durch die beschränkte Auswahl an Monomeren, wie konjugierten Dienen und vinylsubstituierten aromatischen Kohlenwasserstoffen weisen die Produkte keine ausreichende Chemikalienbeständigkeit, Alterungsbeständigkeit, Wärmeformbeständigkeit und niedrige mechanische Werte auf.

Es bestand daher die Aufgabe, die geschilderten Nachteile zu beheben. Die Lösung erfolgt durch Copolymere gemäß Patentanspruch 1.

Die Erfindung betrifft daher Copolymere mit Durchschnittsmolekulargewichten (Gewichtsmittel $\overline{M}^{w}$) von 5500 bis 2 Millionen, die mindestens eine Struktureinheit der allgemeinen Formel

$$-(A)_n-\underset{\underset{|}{O}}{\underset{|}{(B)}}{}_m-(C)_p-(D)_q- \qquad I$$

einpolymerisiert enthalten, die ein Polymeres (Hauptkette) aufbaut, und die ferner Gruppen der allgemeinen Formel

$$-X-E \qquad II$$

(Nebenkette) aufweisen, wobei, jeweils bezogen auf das Copolymere, die Summe der Struktureinheiten I 5 bis 95 Gew.% ausmacht bei Durchschnittsmolekulargewichten von 500 bis 1 Million und wobei in der allgemeinen Formel I stehen für:

n: 0 oder eine ganze Zahl
p und q: jeweils 0 oder ganze Zahlen
m: ganze Zahlen
A: mindestens ein monovinylaromatisches Monomeres
B: mindestens eine zur Etherseiten-Gruppenbildung befähigte organische Monomereinheit
C: mindestens eine eine Nitrilgruppe aufweisende Monomereinheit
D: mindestens eine monoolefinische oder diolefinische Monomereinheit

und wobei ferner stehen für

X: den Rest eines mindestens bifunktionellen Kopplungsmittels
E: ein durch anionische Polymerisation erzeugtes, mindestens eine funktionelle Gruppe tragendes, Homo- oder Copolymerisat.

Diese Aufgabe wird somit durch Copolymere gelöst, die eine Hauptkette und als Seitenketten durch anionische Polymerisation erhaltene Homo- oder Copolymerisate enthalten. Bevorzugt sind Copolymere, bei denen die Polymerisate der Hauptkette zusätzlich zu einer monovinylaromatischen Monomereinheit weitere Monomereinheiten enthalten, die sich von unsubstituierten vinylaromatischen Monomereinheiten unterscheiden, wie (Meth)acrylnitril, (Meth)acrylsäureester und (Meth)acrylamide. Die durch anionische Polymerisation erhaltenen Polymeren der Seitenketten bestehen vorzugsweise aus Homo-, Co- und Block-Polymerisaten, die aus vinylaromatischen Monomereinheiten und konjugierten Dienen gebildet werden.

Die erfindungsgemäßen Copolymeren weisen durch die Variabilität der Monomeren in der Hauptkette vorteilhafte Eigenschaften auf.

Nachstehend wird der Aufbau der erfindungsgemäßen Copolymere und seiner wesentlichen Bestandteile, der Haupt- und Nebenketten beschrieben:

1. Das Copolymere

Das Copolymere weist Gesamtmolekulargewichte (alles in Gewichtsmittel $\overline{M}_w$) von 5.500 bis 2 Millionen, insbesondere von 7.000 bis 500.000 und bevorzugt von 40.000 bis 300.000 auf.

Die Molekulargewichte der Hauptkette, aufgebaut aus der Summe der Struktureinheiten I betragen 5.000 bis 1 Million, insbesondere 10.000 bis 100.000.

Die Molekulargewichte der Nebenketten ( S aller Ketten ohne Berücksichtigung von Resten des Abbruchmittels oder Kopplungsmittels) liegen im allgemeinen im Bereich von 500 bis 500.000, insbesondere von 3.000 bis 200.000.

Das Copolymere enthält mindestens eine Hauptkette und mindestens eine Seitenkette; vorzugsweise enthält es eine Hauptkette und mehrere Seitenketten, insbesondere besteht es aus diesen (inclusive der Atome bzw. Atomgruppen zur Verknüpfung).

Die Hauptkette macht, jeweils bezogen auf das Copolymere, 5 bis 95 Gew.%, insbesondere 15 bis 85 Gew.% und sehr bevorzugt 25 bis 75 Gew.% (Rest Σ der Nebenketten) aus.

2. Die Hauptkette

Die Hauptkette repräsentiert ein Polymeres oder Copolymeres das aus Struktureinheiten der allgemeinen Formel

$$-(A)_n-\underset{\substack{|\\ O\\ |}}{(B)}{}_m-(C)_p-(D)_q- \qquad \mathrm{I}$$

aufgebaut ist. Diese Hauptkette ist mit den Polymeren oder Copolymeren der Nebenkette E über den Rest X eines mindestens bifunktionellen Kopplungsmittels $XL_q$ (q = mindestens 2) verbunden gemäß

$$-(A)_n-\underset{\substack{|\\ O\\ |\\ X-E}}{(B)}{}_m-(C)_p-(D)_q- \qquad \mathrm{I}$$

In der allgemeinen Formel bedeuten:

A: eine einpolymerisierte vinylaromatische Einheit,

B: eine zur Etherseitengruppebildung befähigte bzw. eine solche tragende einpolymerisierte organische Monomer-Einheit

C: eine einpolymerisierte Monomer-Einheit die Nitrilgruppen trägt und

D: eine einpolymerisierte Monomer-Einheit aus einem anderen organischen Monomeren als A, B und C.

Die Indices n, p und q stehen jeweils für Null oder eine ganze Zahl. m für eine ganze Zahl.

Die Laufzahlen können dabei z.B. drei oder mehr betragen, wobei zu beachten ist, daß das (Co)-Polymerisat der Hauptkette durch das Molgewicht festgelegt ist.

Im einzelnen ist der Aufbau der Hauptkette durch die Teile der Struktureinheit wie folgt zu beschreiben:

A. Die in den polymeren Einheiten der Hauptkette

$$-(A)_n-\underset{\substack{|\\ O\\ |}}{(B)}{}_m-(C)_p-(D)_q- \qquad \mathrm{I}$$

gegebenenfalls enthaltende Einheit A besteht aus mindestens einer einpolymerisierten monovinylaromatischen Monomereinheit, insbesondere der allgemeinen Formel

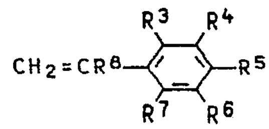

wobei $R^3$ bis $R^7$ = H, $C_1$- bis $C_8$-Alkyl, Halogen, CN oder $NO_2$ und $R^8$ = H oder $C_1$- bis $C_8$-Alkyl ist. Es sind aber auch andere substituierte vinylaromatische Monomere geeignet. Bevorzugt sind Monomere der obigen Formel, in denen $R^3$ bis $R^8$ = H oder Methyl, insbesondere H ist (Styrol). Die Monomeren der Einheit A enthalten keine Hydroxylgruppen. Die Einheit A ist in der polymeren Einheit der Hauptkette in Mengen von 0 bis 99, besonders bevorzugt von 50 bis 95 Gew.% enthalten. Der Gehalt (Laufzahl n) an Monomereneinheit A im Polymeren der Hauptkette ist insbesondere nur dann null, wenn die Einheit B sich von einem Hydroxylgruppen enthaltenden monovinylaromatischen Monomeren ableitet.

B: Die in den polymeren Einheiten der Hauptkette enthaltende Einheit B besteht aus mindestens einer eine Etherseitengruppe tragenden einpolymerisierten organischen Einheit. Diese Einheit leitet sich aus einem einpolymerisierten Hydroxylgruppen enthaltenden Monomer ab, das monoolefinisch ungesättigt ist. Diese Monomereinheit hat bevorzugt die Formel:

$CH_2 = CR^9 - F - (OH)_r$

wobei r = eine ganze Zahl größer als Null, $R^9$ = H oder $C_1$- bis $C_8$-Alkyl und F =

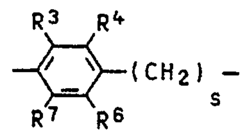

worin $R^3$ bis $R^7$ die bei A angegebene Bedeutung haben und s = 0, 1 oder 2 ist oder

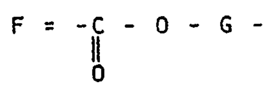

oder

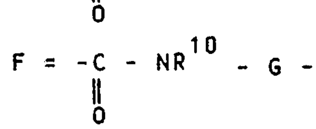

ist, wobei G = ein $C_1$- bis $C_8$-Alkyliden oder Cyclohexyliden und $R^{10}$ = H oder $C_1$- bis $C_8$-Alkyl bedeutet oder

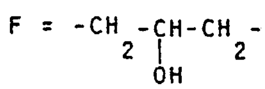

oder

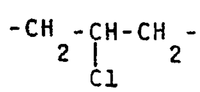

oder

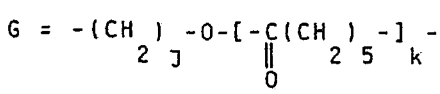

wobei j = 2 bis 10 und k = 1 bis 10 ist
oder

le, der Haupt- und Nebenketten beschrieben:

1. Das Copolymere

Das Copolymere weist Gesamtmolekulargewichte (alles in Gewichtsmittel $\overline{M}_w$) von 5.500 bis 2 Millionen, insbesondere von 7.000 bis 500.000 und bevorzugt von 40.000 bis 300.000 auf.

Die Molekulargewichte der Hauptkette, aufgebaut aus der Summe der Struktureinheiten I betragen 5.000 bis 1 Million, insbesondere 10.000 bis 100.000.

Die Molekulargewichte der Nebenketten ( S aller Ketten ohne Berücksichtigung von Resten des Abbruchmittels oder Kopplungsmittels) liegen im allgemeinen im Bereich von 500 bis 500.000, insbesondere von 3.000 bis 200.000.

Das Copolymere enthält mindestens eine Hauptkette und mindestens eine Seitenkette; vorzugsweise enthält es eine Hauptkette und mehrere Seitenketten, insbesondere besteht es aus diesen (inclusive der Atome bzw. Atomgruppen zur Verknüpfung).

Die Hauptkette macht, jeweils bezogen auf das Copolymere, 5 bis 95 Gew.%, insbesondere 15 bis 85 Gew.% und sehr bevorzugt 25 bis 75 Gew.% (Rest Σ der Nebenketten) aus.

2. Die Hauptkette

Die Hauptkette repräsentiert ein Polymeres oder Copolymeres das aus Struktureinheiten der allgemeinen Formel

$$-(A)_n-\underset{\substack{|\\ O\\ |}}{(B)}_m-(C)_p-(D)_q- \qquad \mathrm{I}$$

aufgebaut ist. Diese Hauptkette ist mit den Polymeren oder Copolymeren der Nebenkette E über den Rest X eines mindestens bifunktionellen Kopplungsmittels $XL_q$ (q = mindestens 2) verbunden gemäß

$$-(A)_n-\underset{\substack{|\\ O\\ |\\ X-E}}{(B)}_m-(C)_p-(D)_q- \qquad \mathrm{I}$$

In der allgemeinen Formel bedeuten:

A: eine einpolymerisierte vinylaromatische Einheit,

B: eine zur Etherseitengruppebildung befähigte bzw. eine solche tragende einpolymerisierte organische Monomer-Einheit

C: eine einpolymerisierte Monomer-Einheit die Nitrilgruppen trägt und

D: eine einpolymerisierte Monomer-Einheit aus einem anderen organischen Monomeren als A, B und C.

Die Indices n, p und q stehen jeweils für Null oder eine ganze Zahl. m für eine ganze Zahl.

Die Laufzahlen können dabei z.B. drei oder mehr betragen, wobei zu beachten ist, daß das (Co)-Polymerisat der Hauptkette durch das Molgewicht festgelegt ist.

Im einzelnen ist der Aufbau der Hauptkette durch die Teile der Struktureinheit wie folgt zu beschreiben:

A. Die in den polymeren Einheiten der Hauptkette

$$-(A)_n-\underset{\substack{|\\ O\\ |}}{(B)}_m-(C)_p-(D)_q- \qquad \mathrm{I}$$

gegebenenfalls enthaltende Einheit A besteht aus mindestens einer einpolymerisierten monovinylaromatischen Monomereinheit, insbesondere der allgemeinen Formel

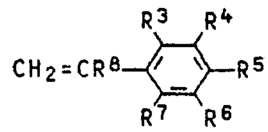

wobei $R^3$ bis $R^7$ = H, $C_1$- bis $C_8$-Alkyl, Halogen, CN oder $NO_2$ und $R^8$ = H oder $C_1$- bis $C_8$-Alkyl ist. Es sind aber auch andere substituierte vinylaromatische Monomere geeignet. Bevorzugt sind Monomere der obigen Formel, in denen $R^3$ bis $R^8$ = H oder Methyl, insbesondere H ist (Styrol). Die Monomeren der Einheit A enthalten keine Hydroxylgruppen. Die Einheit A ist in der polymeren Einheit der Hauptkette in Mengen von 0 bis 99, besonders bevorzugt von 50 bis 95 Gew.% enthalten. Der Gehalt (Laufzahl n) an Monomereneinheit A im Polymeren der Hauptkette ist insbesondere nur dann null, wenn die Einheit B sich von einem Hydroxylgruppen enthaltenden monovinylaromatischen Monomeren ableitet.

B: Die in den polymeren Einheiten der Hauptkette enthaltende Einheit B besteht aus mindestens einer eine Etherseitengruppe tragenden einpolymerisierten organischen Einheit. Diese Einheit leitet sich aus einem einpolymerisierten Hydroxylgruppen enthaltenden Monomer ab, das monoolefinisch ungesättigt ist. Diese Monomereinheit hat bevorzugt die Formel:

$CH_2 = CR^9 - F - (OH)_r$

wobei r = eine ganze Zahl größer als Null, $R^9$ = H oder $C_1$- bis $C_8$-Alkyl und F =

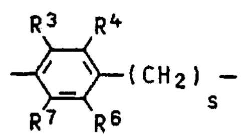

worin $R^3$ bis $R^7$ die bei A angegebene Bedeutung haben und s = 0, 1 oder 2 ist oder

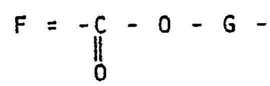

oder

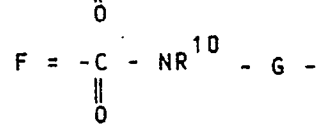

ist, wobei G = ein $C_1$- bis $C_8$-Alkyliden oder Cyclohexyliden und $R^{10}$ = H oder $C_1$- bis $C_8$-Alkyl bedeutet oder

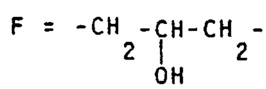

oder

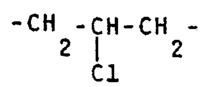

oder

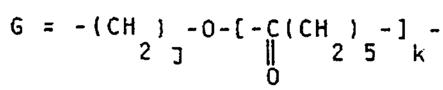

wobei j = 2 bis 10 und k = 1 bis 10 ist
oder

$$G = -(CH_2-CH_2-O-)_h-CH_2-CH_2-$$

$$G = -(CH_2-\underset{\displaystyle CH_3}{\underset{|}{CH}}-O)_h-CH_2-\underset{\displaystyle CH_3}{\underset{|}{CH}}-$$

$$G = -(CH_2-CH_2-O-)_h-(CH_2-\underset{\displaystyle CH_3}{\underset{|}{CH}}-O-)_i-CH_2-\underset{\displaystyle R}{\underset{|}{C}}-$$

wobei h, i = 1, 2 oder größer 2 ist und R = H oder $CH_3$ ist oder Gemische der obigen Monomeren. Die Einheit B ist in der polymeren Einheit der Hauptkette in Mengen von 0,05 bis 70, bevorzugt in Mengen von 0,3 bis 20 Gew.% und insbesondere in Mengen von 0,3 bis 10 Gew.% enthalten.
C. Bei der in den polymeren Einheiten der Hauptkette gegebenenfalls vorhandenen Einheit C handelt es sich um einpolymerisierte, Nitrilgruppen enthaltende Monomere, wie (Meth)acrylnitril. Die Einheit C ist in der polymeren Einheit der Hauptkette in Mengen bis zu 45 %, bevorzugt von 8 bis 40 %, im besonderen von 20 bis 40 % enthalten.
D. Bei der in den polymeren Einheiten der Hauptkette gegebenenfalls vorhandenen Einheit D handelt es sich um mindestens ein einpolymerisiertes mono- oder diolefinisch ungesättigtes Monomeres, das keine Hydroxylgruppe enthält und das mit den den Einheiten A und B zugrundeliegenden Monomeren copolymerisierbar ist. Diese Einheit ist im Polymeren der Hauptkette in Mengen von bis zu 45 Gew.% enthalten. Die Prozentzahlen von A, B, C und D in der polymeren Einheit der Hauptkette müssen sich stets zu 100 addieren. Die Einheit D soll sich aus anderen organischen Monmomeren ableiten als die Einheit A, B und C.

Die Einheiten A, B, C und D können statistisch, d.h. beliebig über die Hauptkette verteilt, alternierend und/oder blockartig im Polymeren der Hauptkette verteilt sein. Derartige Anordnungen von Monomereinheiten in Copolymeren sind bekannt, so etwa ist die Herstellung derartiger Polymerisate und Copolymerisate dem Fachmann geläufig.

3. Die Nebenkette

Die Nebenkette repräsentiert mindestens ein Polymeres oder Copolymeres E, das vorzugsweise durch anionische Polymerisation gewonnen wird.

Das durch anionische Polymerisation erhaltene (Co)Polymere E ist in der Regel über die Etherseitengruppe der Monomereinheit B mit der Hauptkette verbunden.

Das Kopplungsmittel kann verallgemeinert als $XL_Q$ (Q = mindestens 2, L = reaktionsfähige Gruppe) dargestellt werden. Es kann mit dem anionisch erzeugten Polymerisat E oder über mittels Abbruchagentien eingebrachte Gruppen, z.B. OH-Gruppen nach dem Schema

$$E-OH + XL_Q \longrightarrow L_{Q-1}-X-O-E + L-H$$

umgesetzt werden.

Andererseits kann eine weitere reaktionsfähige Gruppe L des Kopplungsmittels mit den oder einigen Etherseitengruppen der Bausteine B der Hauptkette umgesetzt werden gemäß

$$(B)_m - OH + L_{Q-1}X-E \longrightarrow (B)_m - O - X(L_{Q-2}) - E + HL$$

zu dem erfindungsgemäßen Copolymeren. Die Bedingungen sind dem Fachmann bekannt.

Bevorzugt ist es, daß das Polymere E über den Rest X einer mindestens bifunktionellen Kopplungseinheit mit der Hauptkette verbunden ist.

a) Das Kopplungsmittel $XL_Q$ leitet sich bevorzugt von einem mindestens bifunktionellen organischen oder

anorganischen Säurederivat oder von mindestens bifunktionellen Alkylchlorsilanen ab. Insbesondere besteht der Rest des Kopplungsmittels aus:

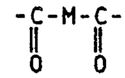

oder

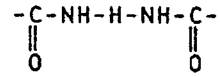

wobei M = ein aliphatischer, olefinischer oder aromatischer Kohlenwasserstoffrest, oder aus

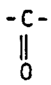, 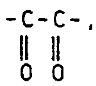, $-SO_2-$, -POI-, , , 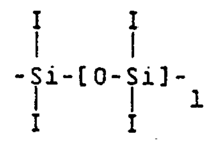

wobei I = Alkyl, Aryl, Aralkyl, Alkoxy, Aryloxy, Aralkoxy oder Halogen und l = null oder eine ganze Zahl z.B. auch größer als 3 ist.

Als Kopplungsmittel seien genannt: Adipinsäuredichlorid, Terephthalsäuredichlorid, Trimesoyldichlorid, Trimellitsäuredichlorid, Oxalsäuredichlorid, Pimelinsäuredichlorid, Glutarsäuredichlorid, Benzophenontetracarbonsäuredichlorid, Oxydiacetyldichlorid, Oxybenzoyldichlorid, Sebacindisäurechlorid und Azealinsäuredichlorid, außerdem Phosgen. Andere bevorzugte Kopplungsmittel sind Phosphor oder Schwefel enthaltende Säurehalogenide wie Sulforyldichorid Phosphoroxytrichlorid, Alkyl-, Aryl- und Arylalkylphosphordichloride, Alkyl-, Aryl- und Arylalkylphosphordichloride. Besonders geeignet sind auch Silicium enthaltende Säurechloride, beispielhaft seien genannt: Dialkyl-, -aryl- und -alkylaryldichlorsilane, Dialkoxy-, -aryloxy- oder arylalkyloxydichlorsilane Methyltrichlorsilan, Ethyltrichlorsilan, Amyltrichlorsilan, Vinyltrichlorsilan, vorzugsweise jedoch Dimethyldichlorsilan. Die Kopplungsmittel können auch in Gemischen eingesetzt werden.

b) Das (Co)Polymere E

An das Kopplungsmittel $XL_Q$ ist ein durch anionische Polymerisation hergestelltes (Co)Polymeres E mit vorzugsweise einer funktionellen Gruppe gebunden. Als funktionelle Gruppen eignen sich Isocyanate, Halogene, Säuren bzw. Säurederivate, Epoxide, Phenole, Alkohole, Amine, Thiole und andere, der polymeranalogen Reaktion zugänglichen Gruppen an, wie dies in E.M. Fetters, "Chemical Reactions on Polymers", Interscience Publishers, New York, 1970, beschrieben ist. Anwendbar sind auch durch anionische Polymerisation hergestellte (Co)Polymere E, bei denen das bei Reaktion lebende Anion mit dem Kopplungsmittel $XL_q$ direkt umgesetzt wird. Bevorzugt sind durch anionische Polymerisation hergestellte Polymere, die eine terminale primäre oder sekundäre Hydroxylgruppe tragen. Diese erhält man in an sich bekannter Weise durch Umsetzung des lebenden Anions mit Ethylenoxid, Propylenoxid oder einem Aldehyd, wie Propionaldehyd als Abbruchmittel.

Die durch anionische Polymerisation erhältlichen (Co)Polymeren E sind dem Fachmann bekannt. Besonders bevorzugt sind Polymere, die aus den Monomeren Styrol, α-Methylstyrol, Vinyltoluol oder 1,3-Dienen, wie Butadien, Isopren und 2,3-Dimethylbutadien oder deren Gemischen gebildet werden. Die anionische Polymerisation wird bekanntermaßen vorzugsweise durch Organo-Lithiumverbindungen, wie Buthyl-Lithium gestartet. Die anionischen Polymeren können Homopolymere, vorzugsweise aber Copolymere sein. Die Copolymeren können statistisch oder blockartig aufgebaut sein. Die bevorzugten, blockartig aufgebauten Polymeren zeichnen sich durch anwendungstechnisch interessante Eigenschaften aus, da durch Ausbildung von Mikrodomänen z.B. thermoplastische Elastomere erhalten werden können.

Nachstehend werden die bevorzugten Ausführungsformen der Erfindung beschrieben.

Im besonderen sind solche Copolymere bevorzugt, bei denen sich die polymeren Einheiten der Hauptkette

$$-(A)_n-\underset{\substack{|\\O\\|}}{(B)}_m-(C)_p-(D)_q- \qquad I$$

zusammensetzt, bezogen auf die Hauptkette = 100 Gew.%, aus:

A = 91 bis 60 Gew.% einer einpolymerisierten vinylaromatischen Einheit, vorzugsweise Styrol, α-Methylstyrol und Vinyltoluol.

B = 0,3 bis 10 Gew.% einer Etherseitengruppen tragenden Einheit, vorzugsweise einem Hydroxyalkyl-(meth)acrylat und deren Amiden

C = 9 bis 40 Gew.% einer einpolymerisierten Nitril-Monomeren-Einheit, vorzugsweise Acrylnitril,

D = 0 bis 20 Gew.% einer einpolymerisierten Einheit aus einem anderen organischen Monomeren als A, B und C, vorzugsweise Methyl(meth) acrylsäureester, besonders bevorzugt Methyl(meth)acrylat.

Als Etherseitengruppen-tragende Einheiten B besonders geeignet sind Hydroxyethyl-(meth)acrylat, Hydroxypropyl-(meth)acrylat, Hydroxybutyl-(meth)acrylat, Hydroxypentyl-(meth)acrylat, Hydroxyhexyl-(meth)acrylat, Hydroxydecyl-(meth)acrylat, Diethylenglykolmono-(meth)acrylat, Triethylenglykolmono-(meth)-acrylat, Tetraethylenglykolmono-(meth)acrylat, Dipropylenglykolmono-(meth)acrylat, Tripropylenglykolmono-(meth)acrylat und außerdem Hydroxymethylstyrol; es können auch Gemische eingesetzt werden.

Bevorzugte (Co)Polymere E der Seitenkette sind die durch anionische Polymerisation erhaltenen Polymerisate, die aus den Monomeren Styrol, α-Methylstyrol, Butadien und/oder Isopren aufgebaut sind. Bevorzugt sind dabei Blockpolymerisate der allgemeinen Formel (III)

$$K-N-CH_2-CH_2-OH$$

oder

$$K-N-CH_2-\underset{\substack{|\\OH}}{CH}-CH_3 \qquad (III)$$

die durch Umsetzung der lebenden Anionen mit Ethylenoxid bzw. Propylenoxid als Abbruchmittel erhältlich sind und die zusammengesetzt sind aus:

K = 5 bis 100 Gew.%, vorzugsweise 10 bis 90 Gew.% einer vinylaromatischen Verbindung, wie Styrol, α-Methylstyrol und Vinyltoluol

N = 0 bis 95 Gew.%, vorzugsweise 10 bis 90 Gew.% 1,3-Dien, wie Butadien, 2,3-Dimethylbutadien und Isopren. Die Block-(Co)Polymeren können vor der Kopplung hydriert werden.

Zur Herstellung der erfindungsgemäßen (Co)Polymeren werden die Polymeren E der Nebenketten mit dem Polymeren (I) der Hauptkette umgesetzt.

Bevorzugte Kopplungsmittel $XL_Q$ sind Dimethylchlorsilan, Phosgen und Oxalylchlorid oder Gemische davon, bevorzugt wird jedoch ein Kopplungsmittel allein eingesetzt. Es kann auch ein mehrfunktionelles Kopplungsmittel wie Methyltrichlorsilan eingesetzt werden, gegebenenfalls allein oder im Gemisch mit Dimethyldichlorsilan.

Bevorzugt werden dabei die Polymeren der Seitenketten E zuerst mit dem Kopplungsmittel umgesetzt. Die Kopplungsmittel reagieren mit der Die Kopplungsreaktion kann in Lösung, Suspension, Schmelze oder in einer Mehrphasenreaktion, z.B. einer Zweiphasenreaktion, und bevorzugt unter Verwendung eines Säurefängers durchgeführt werden.

Vorzugsweise wird zur Kopplung in einem nichtreagierenden (inerten) Lösungsmittel gearbeitet, wie Cyclohexan, Toluol, Xylol, Trimethylbenzol oder Tetrahydrofuran. Die Reaktion kann bevorzugt von -20 °C bis 150 °C durchgeführt werden. Die Reaktionstemperatur wird vorzugsweise nach Basenstärke des Säurefängers, Art des Kopplungsmittels und Siedepunkt des Lösungsmittels eingestellt.

Als Säurefänger eignen sich die bekannten, in der organischen Chemie üblichen Substanzen, wie Alkali- und Erdalkalihydroxide, Carbonate, tertiäre aliphatische und aromatische Amine, Stickstoff-enthaltende Heterocyclen und Ionenaustauscher. Bei der Verwendung von Phosgen als Kopplungsmittel ist Dimethylanilin bevorzugt. Die Polymeren werden in bekannter Weise aufgearbeitet.

Die erfindungsgemäßen Copolymeren können in der für Styrol-Dien-Blockpolymerisate üblichen Weise mit vinylaromatischen Polymeren, wie niedermolekularen Vinyltoluol-α-Methylstyrolpolymerisaten und aliphatischen Ölen oder Polybutadien- und Polyisopren-Ölen, außerdem mit niedermolekularen NBR-Ölen kombiniert werden.

Die erfindungsgemäßen Copolymeren können in der üblichen Weise modifiziert werden. Sie können

daher z.B. Verstärkungs- und Füllstoffe, insbesondere Glasfasern, Flammschutzmittel, Stabilisatoren, Gleitmittel sowie Farbstoffe und Pigmente enthalten. Als Verstärkungsmittel können z.B. Glasfasern, Glaskugeln, Kaolin, Quarz, Glimmer, Wollastonit, Talkum, Asbest, Titandioxid, Aluminiumoxid, Micovit, Kreide oder calciniertes Aluminiumsilikat eingesetzt werden.

Die erfindungsgemäßen Copolymeren weisen eine Vielfalt an Eigenschaften auf und zeigen eine Reihe von Vorteilen gegenüber bisher bekannten Blockund Pfropfpolymerisaten. Sie vereinigen die Vorzüge der Mikrophasenstrukturen von Blockpolymerisaten mit der Variabilität der Monomerenwahl bei den Pfropfpolymeren.

Die erfindungsgemäßen Copolymeren können auf herkömmlichen Maschinen durch Formblasen, Extrusion oder Spritzguß verarbeitet werden. Sie können als thermoplastische Kautschuke, Werkstoffe, Schmelzkleber, Verträglichmacher bei Polymerblends, Mineralöladditive und zur Herstellung photopolymerer Druckplatten eingesetzt werden. In Kombination mit anderen Thermoplasten können sie zur Verbesserung der Zähigkeit, der Fließeigenschaften und des Oberflächenbildes verwendet werden.

Die in den Beispielen und Versuchen beschriebenen Parameter wurden wie folgt bestimmt.

Das Gewichtsmittel des Molgewichts $\overline{M}_w$ wurde gemessen durch Gelpermeations-Chromatographie in 0,25 gew.%iger Tetrahydrofuranlösung bei 23 C und einer Durchflußgeschwindigkeit von 1,2 ml/min (vgl. G. Glöckner, "Polymercharakterisierung durch Flüssigkeits-Chromatographie", Verlag A. Hüttig, Heidelberg, 1982).

Für die Herstellung von erfindungsgemäßen Copolymeren werden die nachstehend beschriebenen Produkte verwendet.

A. Herstellung eines Styrolpolymeren durch anionische Polymerisation und Umsetzung mit Abbruchmittel

In einem 10 l Rührkessel werden 5230 g Toluol und 1225 g Styrol unter $N_2$-Atmosphäre und unter Ausschluß jeglicher Feuchtigkeit vorgelegt und anschließend auf 45 °C erwärmt. Zur Beseitigung von Verunreinigungen, die den metallorganischen Initiator (sek.-Butyllithium) zerstören wird die Reaktionsmischung solange portionsweise (5 ml) mit dem Initiator (1,2 Gew.% sek.-Butyllithium in Pentan) versetzt, bis ein Temperaturanstieg um ca. 0,5 °C das Einsetzen der Polymerisation anzeigt. Durch unverzügliche Zugabe von 58 mmol Initiator wird jetzt die Polymerisation gestartet, die Kesselheizung wird auf 60 °C eingestellt Unter diesen Bedingungen wird 1 h lang polymerisiert. Anschließend wird die Polymerisation durch Zugabe von 64 mmol Propylenoxid (5 %ig, gelöst in Toluol) abgebrochen. Das Molekulargewicht beträgt $\overline{M}_w$ = 18.000.

B. Herstellung eines Styrol-Isopren-Blockcopolymeren durch anionische Polymerisation unter Abbruch

In einem 10 l Rührkessel werden 5230 g Toluol und 174 g Styrol unter $N_2$-Atmosphäre und unter Ausschluß jeglicher Feuchtigkeit vorgelegt und anschließend auf 45 °C erwärmt. Zur Beseitigung von Verunreinigungen die den metallorganischen Initiator (sek.-Butyllithium) zerstören, wird die Reaktionsmischung solange portionsweise (5 ml) mit dem Initiator (1,2 Gew.% sek.-Butyllithium in Pentan) versetzt, bis ein Temperaturanstieg um ca. 0,5 °C das Einsetzen der Polymerisation anzeigt. Durch unverzügliche Zugabe von 36 mmol Initiator wird die Polymerisation gestartet, die Kesselheizung wird auf 60 °C eingestellt, man polymerisiert 1 h. Dann werden 696 g Isopren zugegeben. Die Innentemperatur steigt auf maximal 75 °C an. Nach Überschreiten der Spitzentemperatur wird noch 1 h bei 70 °C nachpolymerisiert. Man bricht durch Zugabe von 44 mmol Propylenoxid (5 %ig, gelöst in Toluol) ab. Das Molekulargewicht beträgt $\overline{M}_w$ = 26.200.

C. Herstellung eines statistischen Styrol-Butadien-Copolymeren mit Styrolendblock. durch anionische Polymerisation unter Abbruch und anschließender Teilhydrierung

In einem 10 l Rührkessel werden 5230 g Toluol, 140 g Tetrahydrofuran und 37 g Styrol vorgelegt und auf 45 °C erwärmt. Nach dem Austitrieren des Gemisches wird mit 42 mmol sek.-Butyllithium gestartet und 15 min bei 55 °C polymerisiert. Dann wird auf 45 °C abgekühlt und anschließend 683 g Butadien zugegeben. Die Innentemperatur steigt innerhalb von 10 min auf ca. 75 °C an. Nach Überschreiten der Spitzentemperatur wird noch 20 min bei 70 °C nachpolymerisiert, dann wird die Polymerisation durch Zugabe von 50 mmol Propylenoxid abgebrochen. Anschließend wird die Polymerlösung mit Hydrierkatalysator versetzt, der aus 1,3 g Ni(II)-acetylacetonat, 35 g Toluol und 20,6 g Al-triisobutyl-Lösung (20 % in Hexan) besteht. Man hydriert bei 80 °C und 15 bar $H_2$-Druck selektiv die olefinischen Doppelbindungen. Das Molekulargewicht beträgt $\overline{M}_w$ = 21.500.

D. Herstellung eines p-Methylstyrol-Butadien-Copolymeren durch anionische Polymerisation

In einem 10 l Rührkessel werden 5230 g Toluol, 140 g Tetrahydrofuran und 150 g p-Methylstyrol vorgelegt. Man polymerisiert mit 60 mmol sek.-Butyllithium. Dann wird auf 45 °C abgekühlt und anschließend 620 g Butadien zugegeben. Man polymerisiert, bricht ab und hydriert analog Vorschrift C. Das Molekulargewicht beträgt $\overline{M}_w$ = 17.500.

Die Erfindung wird nachstehend anhand von Beispielen näher erläutert.

Beispiel 1 (Vergleichsbeispiel)

Herstellung eines Copolymeren

100 g des vorstehend beschriebenen Produktes A und 6,0 g Dimethylanilin in 1000 ml Toluol werden unter Stickstoff bei 5 °C zu einer Lösung von 6 g Phosgen in 100 ml Toluol bei 5 °C in 20 min zulaufen lassen. Man erwärmt in 1 h auf 60 °C, in einer weiteren Stunde zum Siedepunkt. Der Überschuß an Phosgen wird destillativ entfernt. Die Lösung wird bei 40 °C in 15 min zu einer Lösung von 100 g eines Terpolymerisats (Hauptkette) bestehend aus 65 Gew.% Styrol, 32,5 Gew.% Acrylnitril und 2,5 Gew.% Hydroxyethylacrylat (hergestellt durch kontinuierliche radikalische Polymerisation mit einem $\overline{M}_w$ = 40.000. Zu seiner Herstellung wurden 100 Teile des Monomerengemisches mit 30 Teilen Ethylbenzol kontinuierlich in einen Kessel gefahren und gleichzeitig die gleiche Menge kontinuierlich entnommen, wobei das Gemisch eine mittlere Verweilzeit von 5 h hat und bei 150 °C und 9 bar thermisch ohne Starterzusatz polymerisiert wird. Das Gemisch wird über einen Extruder entgast, das Polymere granuliert) und 6,0 g Dimethylanilin in 1000 ml Toluol und 100 ml DMF zugetropft. Man läßt 12 h bei Rückfluß nachreagieren, läßt abkühlen und gießt die Mischung in Methanol. Das ausgefallene Polymere wird abgesaugt und getrocknet. Das Molekulargewicht beträgt $\overline{M}_w$ = 95.000.

Beispiel 2 (Vergleichsbeispiel)

Herstellung eines Copolymeren aus Haupt- und Nebenkette

100 g des Styrol-Isopren-Block-Copolymeren B und 4,0 g Tributylamin in 1000 ml Toluol werden unter Stickstoff zu einer Lösung von 5,0 g Dimethyldichlorsilan in 100 ml Toluol bei 60 °C in 30 min zugetropft. Man rührt 1 h bei 70 °C nach. Der Überschuß an Dimethyldichlorsilan wird destillativ entfernt. Die Lösung wird bei 70 °C in 15 min zu einer Lösung von 50 g eines Terpolymerisats (bestehend aus 62,5 Gew.% Styrol, 32,5 Gew.% Acrylnitril und 5 Gew.% Hydroxyethylacrylat, hergestellt durch kontinuierliche radikalische Polymerisation, hergestellt wie bei Beispiel 1, jedoch 4,5 h Verweilzeit, mit einem $\overline{M}_w$ = 35.000) und 5,0 g Tributylamin in 500 ml Toluol und 50 ml DMF zugetropft. Man läßt 2 h bei Rückfluß nachreagieren und gießt die Mischung in Methanol. Das ausgefallene Polymere wird abgesaugt und getrocknet. Das Molekulargewicht beträgt $\overline{M}_w$ = 124.000.

Beispiel 3 (Vergleichsbeispiel)

Herstellung eines Copolymeren

100 g des hydrierten Styrol-Butadien-Copolymeren C und 5,0 g Tributylamin in 1000 ml Toluol werden unter Stickstoff zu einer Lösung von 5,0 g Dimethyldichlorsilan in 100 ml Toluol bei 60 °C in 30 min zugetropft. Man rührt 2 h nach und entfernt anschließend den Überschuß an Dimethyldichlorsilan destillativ.

Die Lösung wird bei 70°C 30 min zu einer Lösung von 35 g eines Terpolymerisats (bestehend aus 60 Gew.% Styrol, 32,5 Gew.% Acrylnitril und 7,5 Gew.% Hydroxyethylacrylat, hergestellt durch kontinuierliche radikalische Polymerisation, hergestellt wie bei Beispiel 1, jedoch 4,5 h Verweilzeit, mit einem $\overline{M}_w$ = 38.000) und 5,0 g Tributylamin in 500 ml Toluol und 150 ml DMF zugetropft. Man läßt 3 h bei Rückfluß nachreagieren und gießt die Mischung in Methanol. Das ausgefallene Polymere wird abgesaugt und getrocknet. Das Molekulargewicht wurde zu $\overline{M}_w$ = 120.000 bestimmt.

Beispiel 4 (Vergleichsbeispiel)

Herstellung eines Copolymeren

100 g des hydrierten p-Methylstyrol-Butadien-Blockcopolymeren D werden, wie in Beispiel 3 beschrieben, mit 45 g eines Terpolymerisats (bestehend aus 62,5 Gew.% p-Methylstyrol, 32,5 Gew.% Acrylnitril und 5 Gew.% Hydroxypropylacrylat, hergestellt durch kontinuierliche radikalische Polymerisation, wie bei Beispiel 1, mit einem $\overline{M}_w$ = 43.000) umgesetzt. Das Molekulargewicht beträgt $\overline{M}_w$ = 84.000.

## Ansprüche

1. Copolymere mit einem Durchschnittsmolekulargewicht (Gewichtsmittel $\overline{M}_w$)von 5.500 bis 2 Millionen, die mindestens eine Strukturereinheit der allgemeinen Formel I

$$-(A)_n-(\underset{\underset{|}{O}}{\underset{|}{B}})_m-(C)_p-(D)_q- \qquad (I)$$

einpolymerisiert enthalten, die ein Polymeres (Hauptkette) aufbaut, und die ferner über Sauerstoff angeschlossene Gruppen der allgemeinen Formel II

$$-X-E \qquad (II)$$

(Nebenkette) aufweisen, wobei, jeweils bezogen auf das Copolymere. die Summe der Struktureinheiten I 5 bis 95 Gew.% ausmacht bei Durchschnittsmolekulargewichten von 500 bis 1 Million und wobei in der allgemeinen Formel I stehen für:
n: 0 oder eine ganze Zahl,
p und q: jeweils eine von Null verschiedene ganze Zahl
m: eine ganze Zahl
A: mindestens ein monovinylaromatisches Monomeres
B: mindestens eine zur ETHER-SEITEN-Gruppenbildung befähigte organische Monomereinheit
C: mindestens eine eine Nitrilgruppe aufweisende Monomereinheit
D: mindestens eine monoolefinische oder diolefinische Monomereinheit

und wobei ferner stehen für

X: der Rest eines mindestens bifunktionellen Kopplungsmittels
E: ein durch anionische Polymerisation erzeugtes, mindestens eine funktionelle Gruppe tragendes, Homo- oder Copolymerisat.

2. Copolymere nach Anspruch 1, dadurch gekennzeichnet, daß die Hauptkette I einpolymerisiert enthält, jeweils bezogen auf diese,

bis zu 99 Gew.% der Monomeren A,
0,05 bis 70 Gew.% der Monomereinheit B,

bis zu 45 Gew.% der Monomereinheit C und
bis zu 45 Gew.% der Monomereinheit D.

3. Copolymere nach Anspruch 1, dadurch gekennzeichnet , daß die Hauptkette I einpolymerisiert enthält, jeweils bezogen auf diese,

50 bis 95 Gew.% der Monomeren A,
0,3 bis 20 Gew.% der Monomereinheit B und
8 bis 40 Gew.% der Monomereinheit C.

4. Copolymere nach Anspruch 4, dadurch gekennzeichnet , daß die Hauptkette einpolymerisiert enthält ($\Sigma$ = 100)

60 bis 91 Gew.% Styrol, $\alpha$-Methylstyrol oder Vinyltoluol oder eine binäre oder ternäre Mischung davon als Monomeres A,
0,3 bis 10 Gew.% Hydroxyalkyl-(meth)acrylat mit 1 bis 8 C-Atomen im Alkylrest als Monomereinheit B und
9 bis 40 Gew.% Acrylnitril als Monomereinheit C.

5. Copolymere nach Anspruch 5, dadurch gekennzeichnet, daß der Anteil der Hauptkette 25 bis 75 Gew.% und der der Nebenkette 75 bis 25 Gew.% ausmacht
und die Hauptkette
60 bis 79 Gew.% Styrol, 1 bis 8 Gew.% Hydroxyethylacrylat und 20 bis 40 Gew.% Acrylnitril einpolymerisiert enthalt
und die Nebenketten
im wesentlichen durch anionische Polymerisation mit Li-Alkyl erzeugtes, gegebenenfalls hydriertes, Homopolystyrol oder Copolymerisate von Butadien-Isopren, Styrol-Butadien oder $\alpha$-Methylstyrol-Butadien darstellen.

6. Verfahren zur Herstellung von Copolymeren gemäß Ansprüchen 1 bis 5 durch Umsetzen von durch anionische Polymerisation erzeugten Homo- oder Copolymerisaten (als Seitenkette), wobei die lebenden Anionen zunächst gegebenenfalls mit funktionelle Gruppen bildenden Abbruchmitteln umgesetzt worden sind, mit mindestens einem mindestens 2 funktionelle Gruppen aufweisenden Kopplungsmittel ($XL_Q$, Q = mindestens 2) in Gegenwart eines inerten Lösungsmittels bei Temperaturen von -20° C bis 150°, gegebenenfalls in Anwesenheit eines die Abspaltung des aus den funktionellen Gruppen $L_Q$, des Kopplungsmittels und des aus dem anionisch erzeugten Homo- oder Copolymerisat zu bildenden Moleküls oder den Resten des Abbruchmittels begünstigenden Mittel, und daran anschließende Umsetzung des Reaktionsproduktes $L_{Q-1}$-X-E mit dem Polymerisat der Hauptkette I und üblicher Gewinnung des Reaktionsproduktes.

7. Verwendung eines Copolymeren gemäß Anspruch 1 zur Mischung mit anderen Polymeren.

8. Verwendung von Copolymeren gemäß Anspruch 1 oder hergestellt gemäß Anspruch 7 zur Herstellung von Formteilen.

## Claims

1. A copolymer having a mean molecular weight (weight average $M_W$) of from 5,500 to 2 million and containing in copolymerized form at least one structural unit of the general formula I

$$-(A)_n-\underset{\substack{|\\O\\|}}{(B)_m}-(C)_p-(D)_q- \qquad (I)$$

which builds up a polymer (main chain), and furthermore contains groups of the general formula II

$$- X - E \qquad (II)$$

(side chain) connected via oxygen, where, in each case based on the copolymer, the sum of the structural units I makes up from 5 to 95 % by weight at a mean molecular weight of from 500 to 1 million, and where, in the general formula I,
n is 0 or an integer,
p and q: are each an integer other than zero,
m is an integer,
A is at least one monovinylaromatic monomer,
B is at least one organic monomer unit which is capable of forming ether side groups,
C is at least one monomer unit containing a nitrile group and
D is at least one monoolefinic or diolefinic monomer unit,
and where, furthermore,
X is a radical of an at least bifunctional coupling agent and
E is a homopolymer or copolymer produced by anionic polymerization and carrying at least one functional group.

**2.** A copolymer as claimed in claim 1, wherein the main chain I contains, in copolymerized form, in each case based on this chain,
up to 99% by weight of monomer A,
from 0.05 to 70% by weight of monomer units B,
up to 45% by weight of monomer units C and
up to 45% by weight of monomer units D.

**3.** A copolymer as claimed in claim 1, wherein the main chain I contains, in copolymerized form, in each case based on this chain,
from 50 to 95% by weight of monomer A,
from 0.3 to 20% by weight of monomer units B and
from 8 to 40% by weight of monomer units C.

**4.** A copolymer as claimed in claim 4, wherein the main chain contains, in copolymerized form ($\Sigma = 100$),
from 60 to 91% by weight of styrene, methylstyrene or vinyltoluene or a binary or ternary mixture thereof as monomer A,
from 0.3 to 10% by weight of hydroxyalkyl (meth)acrylate having from 1 to 8 carbon atoms in the alkyl radical as monomer unit B and
from 9 to 40% by weight of acrylonitrile as monomer unit C.

**5.** A copolymer as claimed in claim 5, wherein the main chain makes up from 25 to 75% by weight and the side chain makes up from 75 to 25% by weight, and the main chain contains, in copolymerized form,
from 60 to 79% by weight of styrene, from 1 to 8% by weight of hydroxyethyl acrylate and from 20 to 40% by weight of acrylonitrile,
and the side chains are homopolystyrene or butadieneisoprene, styrene-butadiene or $\alpha$-methylstyrene-butadiene copolymers essentially produced by anionic polymerization using an alkyllithium compound and possibly hydrogenated.

**6.** A process for preparing a copolymer as claimed in claim 1 or 2 or 3 or 4 or 5, by reacting a homopolymer or copolymer (as the side chain) produced by anionic polymerization, the living anions having been first reacted, if desired, with terminating agents which form functional groups, with at least one coupling agent containing at least 2 functional groups ($XL_Q$ where Q is at least 2) in the presence of an inert solvent at from -20°C to 150°C, in the presence or absence of an agent which favours the elemination of the molecule to be formed from the functional groups $L_Q$, the coupling agent and the homopolymer or copolymer to be produced anionically, or the radicals of the terminating agent, and subsequently reacting the reaction product $L_{Q-1}$-X-E with the polymer of the main chain I, and isolating the reaction product in a conventional manner.

7. A method of using a copolymer as claimed in claim 1 for mixing with other polymers.

8. A method of using a copolymer as claimed in claim 1 or prepared as claimed in claim 7 for producing moldings.

## Revendications

1. Copolymères qui possèdent une masse moléculaire moyenne (moyenne en poids $\overline{M}_p$) de 5.500 à 2 millions, qui contiennent, incorporée par polymérisation, au moins une unité structurale de la formule générale I

$$-(A)_n-(\underset{\underset{|}{O}}{B})_m-(C)_p-(D)_q- \qquad (I)$$

qui constitue un polymère (chaîne principale) et qui présentent, en outre, des radicaux liés par l'intermédiaire d'oxygène, de la formule générale II

$$- X - E \qquad (II)$$

(chaîne secondaire) où rapportée à chaque fois au copolymère, la somme des unités structurales I totalise de 5 à 95% en poids pour des masses moléculaires moyennes de 500 à 1 million et où dans la formule générale I :

n: est égal à 0 ou représente un nombre entier,
p et q : sont chacun un nombre entier différent de 0
m: représente un nombre entier,
A: représente au moins un monomère monovinylaromatique,
B: représente au moins une unité d'un monomère organique susceptible d'engendrer des groupes éther latéraux,
C: représente au moins une unité d'un monomère présentant un groupe nitrile,
D: représente au moins une unité d'un monomère monooléfinique ou dioléfinique

et où

X: représente le reste d'au moins un agent de couplage bifonctionnel,
E: représente un homopolymère ou un copolymère, portant au moins un radical fonctionnel, obtenu par polymérisation anionique.

2. Copolymères suivant la revendication 1, caractérisés en ce que la chaîne principale 1 contient, incorporés par copolymérisation et à chaque fois rapportés à celle-ci,

jusqu'à 99% en poids des monomères A,
de 0,05 à 70% en poids de l'unité monomérique B,
jusqu'à 45% en poids de l'unité monomérique C et
jusqu'à 45% en poids de l'unité monomérique D.

3. Copolymères suivant la revendication 1, caractérisés en ce que la chaîne principale I contient, incorporés par polymérisation et chaque fois rapportés à celle-ci,

de 50 à 95% en poids des monomères A,
de 0,3 à 20% en poids de l'unité monomérique B et
de 8 à 40% en poids de l'unité monomérique C.

**4.** Copolymères suivant la revendication 4, caractérisés en ce que la chaîne principale contient, incorporés par polymérisation ($\Sigma = 100$),

de 60 à 91% en poids de styrène, d'α-méthylstyrène ou de vinyltoluène, ou d'un mélange binaire ou ternaire de celui-ci, à titre de monomère A,
de 0 à 10% en poids de (méth)acrylate d'hydroxyalkyle dont le radical alkyle comporte de 1 à 8 atomes de carbone, à titre d'unité monomérique B et
de 9 à 40% en poids d'acrylonitrile, à titre d'unité monomérique C.

**5.** Copolymères suivant la revendication 5, caractérisés en ce que la fraction de la chaîne principale en constitue de 25 à 75% en poids et la fraction de la chaîne secondaire en constitue de 75 à 25% en poids
et la chaîne principale contient, incorporés par polymérisation,
de 60 à 79% en poids de styrène, de 1 à 8% en poids d'acrylate d'hydroxyéthyle et de 20 à 40% en poids d'acrylonitrile
et les chaînes latérales
représentent des copolymères du butadiène et de l'isoprène, du styrène et du butadiène, ou de l'α-méthylstyrène et du butadiène, ou de l'homopolystyrène, éventuellement hydrogéné, obtenu essentiellement par polymérisation anionique avec Li-alkyle.

**6.** Procédé de préparation de copolymères selon les revendications 1 à 5, par la réaction d'homo- ou de copolymères obtenus par polymérisation anionique (à titre de chaînes latérales), où les anions vivants ont été amenés à réagir d'abord éventuellement avec des agents de scission engendrant des radicaux fonctionnels, avec au moins un agent de couplage présentant au moins deux radicaux fonctionnels ($XL_Q$, Q = au moins 2), en présence d'un solvant inerte, à des températures d'au moins 20 à 150 °C, éventuellement en présence d'un agent favorisant la séparation de la molécule à former à partir des radicaux fonctionnels $L_Q$, de l'agent de couplage et de l'homo- ou copolymère anioniquement obtenu ou des restes de l'agent de scission et réaction subséquente du produit de la réaction $L_{Q-1}$-X-E avec le polymère de la chaîne principale I et obtention usuelle du produit de la réaction.

**7.** Utilisation d'un copolymère suivant la revendication 1, en vue du mélange à d'autres polymères.

**8.** Utilisation de copolymères selon la revendication 1, ou préparés selon la revendication 7, en vue de la fabrication d'articles moulés.